(19) Europäisches Patentamt
European Patent Office
Office européen des brevets

(11) EP 0 496 317 B1

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.[6]: **C08J 5/24**, C08J 5/04
// C08L77:10

(21) Anmeldenummer: **92100821.5**

(22) Anmeldetag: **18.01.1992**

(54) **Halbzeug und daraus hergestellte faserverstärkte Verbundwerkstoffe**

Prepreg and fibre reinforced composites therefrom

Préimprégné et composites renforcés par des fibres à partir de ce préimprégné

(84) Benannte Vertragsstaaten:
**DE**

(30) Priorität: **22.01.1991 DE 4101675**

(43) Veröffentlichungstag der Anmeldung:
**29.07.1992 Patentblatt 1992/31**

(73) Patentinhaber: **HOECHST AKTIENGESELLSCHAFT**
**D-65926 Frankfurt am Main (DE)**

(72) Erfinder:
- **Heinrich, Karl**
  **W-8934 Grossaitingen (DE)**
- **Brüning, Hans-Joachim**
  **W-8900 Augsburg (DE)**
- **Gebauer, Elke**
  **W-8903 Bobingen 1 (DE)**

(56) Entgegenhaltungen:
**EP-A- 0 307 993** **EP-A- 0 364 891**
**DE-A- 3 818 209**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 496 317 B1

Printed by Jouve, 75001 PARIS (FR)

**Beschreibung**

Die vorliegende Erfindung betrifft ein Halbzeug zur Herstellung von Verbundwerkstoffen, die daraus hergestellten Verbundwerkstoffe, sowie die Verwendung dieses Halbzeuges zur Herstellung von Verbundwerkstoffen.

Bei der Herstellung faserverstärkter Kunststoffe besteht eine Ausführungsmöglichkeit darin, daß man einen thermoplastischen Kunststoff und ein Verstärkungsmaterial jeweils in Faserform vorlegt und nach entsprechender Formgebung die thermoplastischen Matrixfasern unter Ausbildung eines Verbundwerkstoffes aufschmilzt. Diese Technik wird z.B. in einem Aufsatz von Geßner, Chemiefasern/Textilindustrie (Industrie-Textilien), V 39/91, T 185 ff, 1989, ausführlich beschrieben. Die beiden Fasern können dabei in Form von Spinnfasern gemischt und gemeinsam ersponnen werden, oder es werden durch Verwirbeln und/oder Verzwirnen Mischgarne hergestellt. Weiterhin kann die Mischung im Flächengebilde erfolgen oder es können auch Schichtstoffe aus Flächengebilden aus der thermoplastischen Faser und Flächengebilden aus der Verstärkungsfaser gebildet werden.

Als Verstärkungsfasern werden üblicherweise anorganische Fasern, wie z.B. Glas-, Kohlenstoff- oder Borfasern gewählt, aber auch hochtemperaturbeständige synthetische Fasern, wie z.B. Aramidfasern oder Fasern aus aromatischen Polyestern. Als thermoplastische Matrixfasern werden beispielsweise Polyolefine, Polyester oder Polyetherketone verwendet.

Kombinationen von Verstärkungsfasern mit thermoplastischen Matrixmaterialien sind im Stand der Technik bereits beschrieben worden. Solche Kombinationen werden z.B. in den US-A-4,925,729, EP-A-62,142, DE-A-3,935,264, DE-A-3,426,458 und DE-A-3,532,434 offenbart. Neben den unterschiedlichsten thermoplastischen Matrixmaterialien werden in diesen Publikationen auch aliphatische Polyamide, z.B. Polyamid-6 vorgeschlagen.

Auch die Verwendung von aromatischen Polyamiden als Matrixmaterialien ist bereits beschrieben worden. So wird z.B. in der EP-A-321,735 ein Leichtverbundwerkstoff beschrieben, der eine Hohlräume enthaltende Thermoplastmatrix aufweist, in die dreidimensional geordnete über 50 mm lange Verstärkungsfasern eingearbeitet sind. Unter der Vielzahl der möglichen Materialien, die zum Aufbau der Thermoplastmatrix vorgeschlagen werden, sind auch Polyarylamide genannt.

In der EP-A-307,993 werden Kombinationen aus Verstärkungsfasern und speziellen thermoplastischen Aramiden zur Herstellung von Verbundwerkstoffen offenbart. Mit diesen Kombinationen sollen Verbundwerkstoffe mit hoher thermischer und chemischer Stabilität hergestellt werden. In der Beschreibung der EP-A-307,933 sind verschiedene Möglichkeiten der Kombinationen der Verstärkungsfasern mit den thermoplastischen Aramiden vor der eigentlichen Herstellung des Verbundwerkstoffes aufgeführt, beispielsweise der Einsatz von Verstärkungsfasern zusammen mit Folien aus thermoplastischem Aramid oder der Einsatz einer Kombination von beiden Fasertypen.

Mit der vorliegenden Erfindung sollen Halbzeuge zur Herstellung faserverstärkter Verbundwerkstoffe bereitgestellt werden, die sich durch gute Verarbeitungseigenschaften auszeichnen, die beispielsweise eine gute Drapierbarkeit besitzen und in denen die in Faserform vorliegenden Komponenten gut durchmischt sind, so daß beim Aufschmelzen der Matrixfasern eine möglichst vollständige Umhüllung der Verstärkungsfasern erfolgt.

Gelöst wird diese Aufgabe durch das Halbzeug gemäß Anspruch 1 und durch den Verbundwerkstoff gemäß Anspruch 12.

Infolge des praktisch vollständigen Aufschmelzens der das Matrixmaterial bildenden thermoplastisch verarbeitbaren Aramidfasern werden die Verstärkungsfasern hoher Festigkeit und hohen Moduls vollständig umflossen und umhüllt, so daß sich eine möglichst große Kontaktfläche zwischen Verstärkungsfaser und Matrixmaterial ausbildet. Dadurch werden die Verstärkungseigenschaften der hochfesten und hochmoduligen Verstärkungsfasern optimal ausgenutzt und es resultieren Verbundwerkstoffe mit ausgezeichneten mechanischen und thermischen Eigenschaften.

Unter dem Begriff "Verstärkungsfasern hoher Festigkeit und hohen Moduls" sind im Rahmen dieser Beschreibung Fasern aus anorganischem Material oder aus organischen Polymeren zu verstehen, die eine feinheitsbezogene Festigkeit von mehr als etwa 20 cN/dtex und einen Anfangsmodul (bezogen auf 100 % Dehnung) von mehr als etwa 30 GPa, vorzugsweise mehr als 50 GPa, aufweisen.

Unter dem Begriff "textiles Flächengebilde" sind im Rahmen dieser Beschreibung Gewebe aller Art, Maschenwaren, wie Gestricke oder Gewirke, und Gebilde zu verstehen, die sich aus einer Kombination verschiedener flächenbildender Techniken herstellen lassen, wie durch Webwirkverfahren, insbesondere Kettwirktechniken oder multiaxiale Fadengelege, aber auch nichtgewebte textile Flächengebilde, wie Vliesstoffe, Rovings und Fadenketten, oder durch Tufting Verfahren. Gemeinsam ist allen diesen Flächengebilden die räumliche Nähe und gleichmäßige Mischung von Verstärkungs- und Matrixfasern, die ein Aufschmelzen der Matrixkomponente und ein Verfließen entlang der Verstärkungsfasern erleichtert.

Die textilen Flächengebilde der vorliegenden Erfindung werden im allgemeinen aus Garnen aufgebaut. Unter dem Begriff "Garn" sind im Sinne dieser Beschreibung Multifilamentgarne, Stapelfasergarne, Mischgarne aus Multifilamenten und Stapelfasern und auch Monofilamente zu verstehen. Unter dem Begriff "Faser" sind im Sinne dieser Beschreibung sowohl Stapelfasern als auch endlose Filamente zu verstehen.

Verstärkungsfasern und Matrixfasern können sowohl in Form getrennter Garne vorliegen als auch als Mischgarne.

Ferner können auch Bikomponentenfasern aus Verstärkungs- und Matrixkomponenten eingesetzt werden. In den Garnen liegen die Verstärkungsfasern vorzugsweise in Form von Multifilamenten vor.

Ganz besonders bevorzugt verwendet man zur Herstellung der textilen Flächengebilde Mischgarne aus Verstärkungs- und Matrixfasern. Diese Flächengebilde zeichnen sich durch eine besonders innige Vermischung der beiden Fasersorten aus und lassen sich unter besonders schonenden Bedingungen zu Verbundwerkstoffen aufschmelzen. Ferner lassen sich in dieser Ausführungsform die Mischungsverhältnisse besonders genau einstellen.

Bei einer weiteren bevorzugten Ausführungsform werden die Verstärkungs- und Matrixfasern in Form von Bikomponenten- oder Mehrkomponentenfasern eingesetzt, beispielsweise in Form von Kern/Mantel-Fasern, Seite/Seite-Fasern oder Matrix/-fibrillen-Fasern. Dabei ist die Matrixkomponente so anzuordnen, daß zumindest ein Teil dieser Komponente sich auf der Oberfläche dieser Fasern befindet.

Als Verstärkungsfasern kommen praktisch alle nicht schmelzbaren oder hochschmelzbaren, hochmoduligen und hochfesten Fasern aus anorganischem Material oder aus organischen Polymeren in Frage. Diese Fasern werden so ausgewählt, daß sie unter den für die thermoplastischen Faseranteile geeigneten Verarbeitungsbedingungen noch nicht schmelzen bzw. sich praktisch nicht thermoplastisch verformen und im entstehenden Verbundwerkstoff als Verstärkungsfasern vorliegen.

Unter dem Begriff "Aramid" oder "aromatisches Polyamid" ist ihm Rahmen der vorliegenden Beschreibung ein Polyamid zu verstehen, das im wesentlichen aromatische Reste in der Polymerkette aufweist, beispielsweise zu mehr als 80 Mol-% aus aromatischen Monomereinheiten aufgebaut ist.

Zur Herstellung des erfindungsgemäßen Halbzeugs bzw. Verbundwerkstoffes sind praktisch alle Kombinationen von hochfesten und hochmoduligen Verstärkungsfasern mit den ausgewählten Aramidfasern aus thermoplastisch verarbeitbarem Aramid einsetzbar, solange die das Verstärkungsmaterial bildende Faser (= Verstärkungsfaser) einen gegenüber der das Matrixmaterial bildenden Faser (= Matrixfaser) erhöhten Schmelz- oder Zersetzungspunkt aufweist, so daß die Matrixfaser praktisch vollständig aufgeschmolzen werden kann, ohne daß die Verstärkungsfaser dabei wesentlich verändert wird. Üblicherweise liegt der Schmelzpunkt der Matrixfaser mindestens 10°C unterhalb des Schmelz- oder Zersetzungspunktes der Verstärkungsfaser, bevorzugt mehr als 30°C unterhalb des Schmelz- oder Zersetzungspunktes.

Als Verstärkungsfaser für das erfindungsgemäße Halbzeug bzw. den erfindungsgemäßen Verbundwerkstoff eignen sich praktisch alle für diesen Zweck geeigneten anorganischen und organischen polymeren faserbildenden Materialien.

Beispiele für bevorzugte anorganische Verstärkungsfasern sind Bor- und insbesondere Glas- und Kohlenstoffasern.

Beispiele für bevorzugte organische polymere Materialien sind Polyester-, insbesondere aromatische Polyester-, Polyacrylnitril- und insbesondere Aramidfasern. Bei der Verwendung von Aramiden als Verstärkungs- und als Matrixfaser wird ein weitgehend einheitlicher Werkstoff erhalten, wobei sich eine besonders gute Haftung zwischen beiden Komponenten im Verbundwerkstoff ergibt. Diese Ausführungsform ist daher besonders bevorzugt.

Als Verstärkungsfaser lassen sich schmelzbare und bevorzugt nicht schmelzbare Fasern, insbesondere Aramidfasern einsetzen. Der Einzelfasertiter der Verstärkungsfasern kann innerhalb weiter Grenzen variiert werden, z.B. von 0,5 bis 5 dtex.

Beispiele für bevorzugte Aramidfasern sehr hoher Festigkeit und sehr hohen Moduls sind im wesentlichen aus p-aromatischen Resten aufgebaute Aramide, wie Poly-(p-phenylen-terephthalamid). Beispiele dafür sind die Produkte KEVLAR$^{(R)}$ 29 und KEVLAR$^{(R)}$ 49 der Fa. Du Pont.

Beispiele für bevorzugte Aramidfasern hoher Festigkeit und hohen Moduls sind Aramide, die einen wesentlichen Anteil an aromatischen m-Verbindungen enthalten, wie Poly-(m-phenylen-terephthalamid),
Poly-(m-phenylen-isophthalamid) oder
Poly-(p-phenylen-isophthalamid). Beispiele für solche Aramide sind die Produkte NOMEX$^{(R)}$ der Fa. Du Pont. Diese Aramide sind in gängigen Lösungsmitteln unlöslich.

Bevorzugt setzt man Verstärkungsfasern aus in organischen Lösungsmitteln löslichen Aramiden ein, insbesondere aus solchen Aramiden, die in polaren aprotischen Lösungsmitteln, wie Dimethylformamid oder Dimethylsulfoxid, löslich sind.

Dazu zählen beispielsweise lösliche aromatische Polyamide auf Basis von Terephthalsäure und 3-(p-Aminophenoxy)-4-aminobenzanilid, wie in der DE-A-21 44 126 beschrieben; oder aromatischen Polyamide auf Basis von Terephthalsäure, p-Phenylendiamin und 3,4'-Diaminodiphenylether, wie in der DE-C-25 56 883 und in der DE-A-30 07 063 beschrieben, oder aromatische Polyamide auf Basis von Terephthalsäure und ausgewählten Anteilen ausgewählter Diamine, wie in der DE-A-35 10 655, -36 05 394 und in der EP-A-199 090 beschrieben.

Besonders bevorzugt verwendet man Verstärkungsfasern aus in organischen Polyamid-Lösungsmitteln löslichen Copolyamiden gemäß den Ansprüchen 9, 10 und 11.

Beispiele für die in diesen Ansprüchen genannten Reste $Ar^1$ und $Ar^2$ sind Naphthalin-1,4-diyl und insbesondere p-Phenylen; Beispiele für $R^1$ und $R^2$ sind Methyl, Methoxy und Chlor.

Solche Aramide sind aus den EP-A-364 891, -364 892 und -364 893 bekannt und der Inhalt dieser Publikationen ist ebenfalls Inhalt der vorliegenden Beschreibung.

Der Einzelfasertiter der Matrixfasern kann innerhalb weiter Grenzen variiert werden, z.B. von 0,5 bis 5 dtex.

Als Matrixfasern werden Fasern aus thermoplastisch verarbeitbaren aromatischen Copolyetheramiden der Formel II eingesetzt

$$R^3-\cdot\cdot\left[NH-Ar^4-NH\right]_x\cdot\cdot\left[\overset{O}{\overset{\|}{C}}-Ar^3-\overset{O}{\overset{\|}{C}}\right]_y\cdot\cdot\left[NH-Ar^5-O-Ar^6-Y-Ar^6-O-Ar^5-NH\right]_z\cdot\cdot-R^3 \quad (II),$$

worin $Ar^3$ einen zweiwertigen substituierten oder unsubstituierten aromatischen Rest bedeutet, dessen freie Valenzen sich in para- oder meta-Stellung oder in vergleichbarer paralleler oder gewinkelter Stellung zueinander befinden, $Ar^4$ eine der für $Ar^3$ angegebenen Bedeutungen haben kann oder eine Gruppe $-Ar^7-Z-Ar^7-$ darstellt,

wobei Z eine $-C(CH_3)_2-$ oder $-O-Ar^7-O-$ Brücke ist und
$Ar^7$ für einen zweiwertigen aromatischen Rest steht,
$Ar^5$ und $Ar^6$ gleich oder verschieden voneinander sind und für einen substituierten oder unsubstituierten para- oder meta-Arylenrest stehen,
Y eine $-C(CH_3)_2-$, $-SO_2-$, -S- oder $-C(CF_3)_2$-Brücke darstellt, wobei

a) das Polyetheramid ein mittleres Molekulargewicht (Zahlenmittel) im Bereich von 5000 bis 50 000 aufweist
b) die Molekulargewichtskontrolle gezielt durch nichtstöchiometrische Zugabe der Monomereinheiten erfolgt, wobei die Summe der Molenbrüche x, y und z eins ist, die Summe von x und z nicht gleich y ist und x den Wert null annehmen kann, und
c) die Enden der Polymerkette praktisch vollständig mit monofunktionellen im Polymer nicht weiterreagierenden Resten $R^3$ verschlossen sind, die unabhängig voneinander gleich oder verschieden sein können.

Matrixfasern auf Basis dieser Aramide sind thermoplastisch verarbeitbar, zeichnen sich durch ein besonders gutes Schmelzverhalten aus und führen zu Verbundwerkstoffen mit einer ausgezeichneten Festigkeit.

Bei $Ar^3$ kann es sich um einen einkernigen oder kondensierten zweikernigen aromatischen zweiwertigen Rest handeln oder um einen Rest der Formel $-Ar^7-Q-Ar^7-$ , worin $Ar^7$ die oben definierte Bedeutung besitzt und Q eine direkte C-C-Bindung ist oder eine -O-, -CO-, -S-, -SO- oder $-SO_2$-Brücke bedeutet.

Bei $Ar^3$ kann es sich um heterocyclisch-aromatische oder bevorzugt um carbocyclisch-aromatische Reste handeln.

Heterocyclisch-aromatische Reste weisen vorzugsweise ein oder zwei Sauerstoff- und/oder Schwefel- und/oder Stickstoffatome im Kern auf.

Bei $Ar^5$ und $Ar^6$ handelt es sich im allgemeinen um carbocyclisch-aromatische Arylenreste, deren freie Valenzen sich in para- oder meta-Stellung oder in vergleichbarer paralleler oder gewinkelter Stellung zueinander befinden, vorzugsweise handelt es sich um einkernige aromatische Reste.

$Ar^7$ hat im allgemeinen eine der für $Ar^5$ bzw. $Ar^6$ definierten Bedeutungen.

Beispiele für Reste $-Ar^3-$, $-Ar^4-$, $-Ar^5-$, $Ar^6-$ und $-Ar^7-$ sind p-Phenylen, m-Phenylen, Biphenyl-4,4'-diyl oder Naphthalin-1,4-diyl.

Beispiele für Substituenten, die sich gegebenenfalls an den Resten $-Ar^1-$ bis $-Ar^7-$ befinden, sind verzweigte oder insbesondere geradkettige $C_1$-$C_6$-Alkylreste, wie Methyl, Ethyl, n-Propyl, Isopropyl, n-Butyl, n-Pentyl oder n-Hexyl, sowie die entsprechenden Perfluorderivate mit bis zu sechs C-Atomen oder die entsprechenden Alkoxyderivate. Bevorzugt wird Methyl.

Beispiele für Halogensubstituenten sind Brom oder insbesondere Chlor.

Die erfindungsgemäß verwendeten aromatischen Polyetheramide der Formel II werden durch eine gezielte Molekulargewichtskontrolle durch nicht stöchiometrische Zugabe der Monomereinheiten hergestellt, wobei die Summe der Molenbrüche x, y und z eins ist, die Summe von x und z aber nicht gleich y sein darf und x den Wert Null annehmen kann. In einer bevorzugten Ausführung ist z größer als x.

Nach Abschluß der Polykondensationsreaktion werden die Enden der Polymerkette durch Zugabe von monofunktionellen Reagenzien, die im Polymer zu nicht weiterreagierenden Gruppen $R^3$ reagieren, vollständig verschlossen. Die Endgruppen $R^3$ sind dabei unabhängig voneinander, und können gleich oder verschieden sein und werden bevorzugt aus einer Gruppe der Formeln III, IV, V und/oder VI ausgewählt.

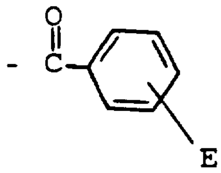 , 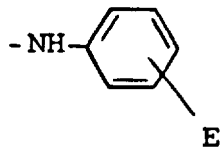 , 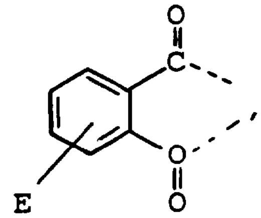 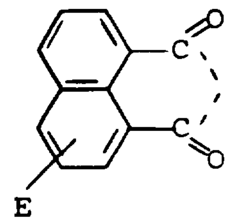

(III) (IV) (V) (VI)

Für den Fall der Endgruppen V und/oder VI, ist der terminale Stickstoff in Formel (II) ein Imidstickstoff.

E stellt in den oben angegebenen Formeln ein Wasserstoff- oder ein Halogenatom, insbesondere ein Chlor-, Brom- oder Fluoratom, oder einen organischen Rest, beispielsweise eine Aryl(oxy)gruppe dar.

Das aromatische Polyetheramid der Formel II kann durch Umsetzung von ein oder mehreren Dicarbonsäurederivaten mit einem oder mehreren Diaminen nach dem Lösungs-, Fällungs- oder Schmelzkondenstionsverfahren hergestellt werden, wobei eine der Komponenten im stöchiometrischen Unterschuß eingesetzt wird und nach Beendigung der Polykondensation ein Kettenverschlußmittel zugegeben wird. Es wurde gefunden, daß sich thermoplastische aromatische Polyetheramide die sehr gute mechanische Eigenschaften besitzen über konventionelle Techniken herstellen lassen, wenn

a) das Molekulargewicht durch Verwendung nicht stöchiometrischer Mengen der Monomeren gezielt kontrolliert wird,

b) die Enden der Polymerkette durch monofunktionelle, im Polymer nicht weiter reagierende Verbindungen vollständig verschlossen werden, und vorzugsweise

c) der Gehalt an anorganischen Verunreinigungen im Polymer nach der Aufarbeitung und Isolierung 500 ppm nicht übersteigt.

Die erfindungsgemäß eingesetzten thermoplastischen aromatischen Polyamide der Formel II zeichnen sich ferner dadurch aus, daß diese ein mittleres Molekulargewicht im Bereich von 5000 bis 50000 und eine niedrigere Schmelzviskosität, die 10000 Pas nicht überschreitet, aufweisen.

Zur Herstellung dieser Polyetheramide eignen sich folgende Verbindungen:
Dicarbonsäurederivate der Formel (VII)

$$W - CO - Ar^3 - CO - W \qquad (VII)$$

wobei $Ar^3$ die oben angegebene Bedeutung hat, und W ein Fluor-, Chlor-, Brom- oder Jodatom, bevorzugt ein Chloratom oder eine -OH oder $OR^4$ Gruppe, wobei $R^4$ ein verzweigter oder unverzweigter aliphatischer oder aromatischer Rest ist, darstellen kann.

Beispiele für Verbindungen der Formel (VII) sind:

Terephthalsäure
Terephthalsäuredichlorid
Terephthalsäurediphenylester
Isophthalsäure
Isophthalsäurediphenylester
Isophthalsäurechlorid
Phenoxyterephthalsäure
Phenoxytherephthalsäuredichlorid
Phenoxyterephthalsäurediphenylester
Di(n-Hexyloxy)terephthalsäure
Bis-(n-Hexyloxy)terephthalsäuredichlorid
Bis-(n-Hexyloxy)terephthalsäurediphenylester
2,5-Furandicarbonsäure

2,5-Furandicarbonsäurechlorid
2,5-Furandiphenylester
Thiophendicarbonsäure
Naphthalin-2,6-dicarbonsäure
Diphenylether-4,4'-dicarbonsäure
Benzophenon-4,4'-dicarbonsäure
Isopropyliden-4,4'-dibenzoesäure
Diphenylsulfon-4,4'-dicarbonsäure
Tetraphenylthiophen-dicarbonsäure
Diphenylsulfoxid-4,4'-dicarbonsäure
Diphenylthioether-4,4'-dicarbonsäure
Trimethylphenylidandicarbonsäure

Als aromatische Diamine der Formel (VII)

$$H_2N - Ar^4 - NH_2 \qquad (VII)$$

in der $Ar^4$ die oben angegebene Bedeutung hat, eignen sich vorzugsweise folgende Verbindungen:

m-Phenylendiamin
p-Phenylendiamin
2,4-Dichlor-p-phenylendiamin
Diaminopyridin
Bis(aminophenoxy)benzol
2,6-Bis(aminophenoxy)pyridin
3,3'-Dimethylbenzidin
4,4'- und 3,4'-Diaminodiphenylether
Isopropyliden-4,4'-dianilin
p,p'- und m,m'-Bis(4aminophenylisopropyliden)benzol
4,4'- und 3,3'-Diaminobenzophenon
4,4'- und 3,3'-Diaminodiphenylsulfon
Bis(2-amino-3-methylbenzo)thiophen-S,S-dioxid

Als aromatische Diamine kommen ferner solche der Formel (IX) in Betracht

$$H_2N - Ar^5 - O - Ar^6 - Y - Ar^6 - O - Ar^5 - NH_2 \qquad (IX)$$

wobei $Ar^5$, $Ar^6$ und Y die oben angegebene Bedeutung haben.

Als aromatische Diamine der Formel (IX) kommen in Betracht:

2,2-Bis-[4-(3-trifluormethyl-4-aminophenoxy)phenyl]propan
Bis-[4-(4-aminophenoxy)phenyl]sulfid
Bis-[4-(3-aminophenoxy)phenyl]sulfid
Bis-[4-[3-aminophenoxy)phenyl]sulfon
Bis-[4-[4-aminophenoxy)phenyl]sulfon
2,2-Bis-[4-[4-aminophenoxy)phenyl]propan
2,2-Bis-[4-[3-aminophenoxy)phenyl]propan
2,2-Bis-[4-[2-aminophenoxy)phenyl]propan
1,1,1,3,3,3-Hexafluor-2,2-bis-[4-(4-aminophenoxy)phenyl]-propan.

Die Herstellung der erfindungsgemäß eingesetzten Polyetheramide erfolgt bevorzugt über Lösungskondensationsprozesse.

Die Lösungskondensation des aromatischen Dicarbonsäuredichlorids mit den aromatischen Diaminen erfolgt in aprotischen, polaren Lösungsmitteln vom Amidtyp, wie z.B. in N,N-Dimethyl-acetamid, vorzugsweise in N-Methyl-2-pyrrolidon. Gegebenenfalls können diesen Lösungsmitteln in bekannter Weise zur Erhöhung der Lösefähigkeit, bzw. zur Stabilisierung der Polyetheramidlösungen, Halogenidsalze der ersten und/oder zweiten Gruppe des periodischen Systems zugesetzt werden. Bevorzugte Zusätze sind Calciumchlorid und/oder Lithiumchlorid. In einer bevorzugten Ausführungsform wird die Kondensation ohne Salzzusatz durchgeführt, da sich die oben beschriebenen aromatischen Polyetheramide durch eine hohe Löslichkeit in den obengenannten Lösungsmitteln des Amidtyps auszeichnen.

Die erfindungsgemäß eingesetzten Polyamide der Formel II erlauben eine thermoplastische Verarbeitung nach Standardmethoden. Sie lassen sich herstellen, wenn mindestens eine der Ausgangskomponenten im stöchiometrischen Unterschuß eingesetzt wird. Auf diese Weise ist es möglich eine Begrenzung des Molekulargewichts entsprechend der bekannten Carothers Gleichung zu erreichen:

$$P_n = \frac{1+q}{1-q}$$

wobei $q \neq 1$ und gleichzeitig $q = y/x+z$ ist.

$P_n$ = Polymerisationsgrad
q = Molverhältnis der Disäurekomponenten zu Aminkomponenten

Beim Arbeiten mit einem Unterschuß an Säuredichlorid wird am Ende der Polyreaktion als Kettenverschlußmittel ein monofunktionelles aromatisches Säurechlorid oder Säureanhydrid zugegeben, beispielsweise Benzoylchlorid, Fluorbenzoylchlorid, Diphenylcarbonsäurechlorid, Phenoxybenzoylchlorid, Phthalsäureanhydrid, Naphthalsäureanhydrid, Y-Chlornaphthalsäureanhydrid.

Derartige Kettenverschlußmittel können gegebenenfalls substituiert sein, vorzugsweise mit Fluor- oder Chloratomen. Bevorzugt wird Benzoylchlorid oder Phthalsäureanhydrid, besonders bevorzugt Benzoylchlorid, eingesetzt.

Wird mit einem Unterschuß an Diaminkomponente gearbeitet, so wird nach Ende der Polykondensation als Kettenverschlußmittel ein monofunktionelles, vorzugsweise aromatisches Amin eingesetzt, beispielsweise Fluoranilin, Chloranilin, 4-Aminodiphenylamin, Aminobiphenylamin, Aminodiphenylether, Aminobenzophenon oder Aminochinolin.

In einer besonders bevorzugten Ausführungsform des Polykondensationsverfahrens wird Disäurechlorid im Unterschuß mit Diamin polykondensiert und anschließend werden die verbliebenen reaktiven Aminogruppen mit einem monofunktionellen Säurechlorid oder Disäureanhydrid desaktiviert.

In einer weiteren bevorzugten Ausführungsform wird das Disäurechlorid im Unterschuß eingesetzt und mit einem Diamin polykondensiert. Anschließend werden mit einem monofunktionellen, vorzugsweise aromatischen, gegebenenfalls substituierten Säurechlorid oder Säureanhydrid, die verbliebenen reaktiven Aminoendgruppen desaktiviert.

Das Kettenverschlußmittel, monofunktionelles Amin bzw. Säurechlorid oder Säureanhydrid, wird dabei bevorzugt in einer stöchiometrischen oder überstöchiometrischen Menge, bezogen auf die Disäure- bzw. Diaminkomponente, eingesetzt.

Zur Herstellung der erfindungsgemäß eingesetzten aromatischen Polyamide kann das Mol-Verhältnis q (Säurekomponenten zu Diaminkomponenten) im Bereich von 0,90 bis 1,10 variiert werden, wobei exakte Stöchiometrie (q = 1) der bifunktionellen Komponenten ausgeschlossen ist. Besonders bevorzugt liegt das Mol-Verhältnis im Bereich von 0,90 bis 0,99 und 1,01 bis 1,10, besonders bevorzugt im Bereich von 0,93 bis 0,98 und 1,02 bis 1,07, insbesondere im Bereich von 0,95 bis 0,97 und 1,03 bis 1,05.

Die Polykondensationstemperaturen liegen üblicherweise zwischen -20 und +120°C, bevorzugt zwischen +10 und +100°C. Besonders gute Ergebnisse werden bei Reaktionstemperaturen zwischen +10 und +80°C erzielt. Die Polykondensationsreaktionen werden vorzugsweise so ausgeführt, daß nach Abschluß der Reaktion 2 bis 40, vorzugsweise 5 bis 30 Gew.-% an Polykondensat in der Lösung vorliegen. Für spezielle Anwendungen kann die Lösung bei Bedarf mit N-Methyl-2-pyrrolidon oder anderen Lösungsmitteln, beispielsweise DMF, DMAC oder Butylcellosolve, verdünnt werden oder unter vermindertem Druck konzentriert werden (Dünnschichtverdampfer).

Nach Beendigung der Polykondensation wird der entstandene und locker an das Amidlösungsmittel gebundene Chlorwasserstoff durch Zugabe säurebindender Hilfsstoffe entfernt. Geeignet sind dafür beispielsweise Lithiumhydroxyd, Calciumhydroxyd, insbesondere aber Calciumoxid, Propylenoxid, Ethylenoxid oder Ammoniak. In einer besonderen Ausführungsform wird als "säurebindendes" Mittel reines Wasser verwendet, welches die Salzsäure verdünnt und gleichzeitig zur Ausfällung des Polymeren dient. Zur Herstellung von geformten Gebilden gemäß der vorliegenden Erfindung werden die oben beschriebenen erfindungsgemäßen Copolyamidlösungen filtriert, entgast und in an sich bekannter Weise zu Aramidfasern- oder -fäden weiterverarbeitet.

Gegebenenfalls können den Lösungen noch geeignete Mengen an Additiven zugesetzt werden. Beispiele sind Lichtstabilisatoren, Antioxidantionsmittel, Flammschutzmittel, Antistatika, Farbstoffe, Farbpigmente oder Füllstoffe.

Zur Isolierung des Polyetheramids kann die Lösung mit einem Fällungsmittel versetzt und das koagulierte Produkt abfiltriert werden. Typische Fällungsmittel sind beispielsweise Wasser, Methanol, Aceton, die gegebenenfalls auch pH-kontrollierende Zusätze wie z.B. Ammoniak oder Essigsäure enthalten können.

Bevorzugt erfolgt die Isolierung durch Zerkleinern der Polymerlösung mit einem Überschuß an Wasser in einer Schneidmühle. Die fein zerkleinerten koagulierten Polymerteilchen erleichtern die nachfolgenden Waschschritte (Entfernen der aus der Salzsäure gebildeten Folgeprodukte) und die Trocknung des Polymeren (Vermeiden von Einschlüssen) nach Abfiltration. Auch eine nachträgliche Zerkleinerung erübrigt sich, da direkt ein rieselfähiges Produkt entsteht.

Außer der beschriebenen Lösungskondensation, die als leicht zugängliches Verfahren gilt, können wie bereits erwähnt, auch andere übliche Verfahren zur Herstellung von Polyamiden, wie beispielsweise Schmelz-, oder Feststoffkondensation, angewendet werden. Auch diese Verfahren beinhalten neben der Kondensation unter die Regelung der Molmasse, Reinigungs- oder Waschschritte sowie den Zusatz geeigneter Additive. Die Additive können darüber hinaus auch dem isolierten Polymer bei der thermoplastischen Verarbeitung zugesetzt werden.

Die erfindungsgemäß eingesetzten aromatischen Polyamide der Formel II besitzen überraschend gute mechanische Eigenschaften und hohe Glastemperaturen.

Der Staudingerindex $[\eta]_o$ liegt im Bereich von 0,4 bis 1,5 dl/g, bevorzugt im Bereich von 0,5 bis 1,3 dl/g, besonders bevorzugt im Bereich von 0,6 bis 1,1 dl/g. Die Glastemperaturen liegen im allgemeinen über 180°C, bevorzugt über 200°C, die Verarbeitungstemperaturen im Bereich von 320 bis 380°C, bevorzugt im Bereich von 330 bis 370°C, besonders bevorzugt im Bereich von 340 bis 360°C.

Die Verarbeitung dieser Polyamide kann über Extrusionsprozesse erfolgen, da die Schmelzviskositäten 10.000 Pas nicht überschreiten. Die Extrusion kann auf üblichen Ein- oder Zweischneckenextrudern erfolgen.

Die Herstellung der erfindungsgemäßen Halbzeuge kann nach einem der bekannten Verfahren zur Herstellung textiler Flächengebilde erfolgen. Der Titer der dabei verwendeten Garne aus Verstärkungs- und/oder Matrixfasern beträgt dabei üblicherweise 150 bis 2500 dtex.

Die thermoplastisch verformbaren Matrixfasern können hierbei in weitgehend unorientiertem Zustand eingebracht werden. Festigkeit und Anfangsmodul dieser Fasern müssen nur für die textilen Verarbeitungsstufen ausreichen.

Bei der Verwendung von Mischgarnen aus tragenden und schmelzenden Fasern werden nur geringe Anforderungen an die Matrixfasern gestellt, während bei Mischgeweben z.B. aus tragenden Kettgarnen und Matrixgarnen als Schuß entsprechend höhere Ansprüche an die Festigkeit gestellt werden.

Die jeweilige Mischtechnik kann nach den Anforderungen des Endproduktes frei gewählt werden.

Die Flächengewichte der erfindungsgemäßen Halbzeuge und die Einzeltiter und Stapellängen der Fasersorten können in weiten Grenzen variiert werden und den Anforderungen des Einsatzgebietes angepaßt werden. Typische Wertge des Flächengewichtes des Halbzeuges liegen im Bereich von 50 bis 500 g/m$^2$. Die die erfindungsgemäßen Halbzeuge aufbauenden Filamente oder Stapelfasern können beliebige Querschnitte aufweisen, wie runde, hantel- oder nierenförmige, dreieckige oder tri- oder multilobale Querschnitte. Es sind auch Hohlfasern einsetzbar.

Der Vorteil des erfindungsgemäßen Halbzeugs liegt in der Verwendung aromatischer Polyamide als Matrixfasern, also von thermisch und chemisch sehr stabilen Werkstoffen. Durch die Auswahl der aromatischen Polyamide und deren Anteil am Halbzeug, sowie durch die Auswahl der Mischtechnik ergibt sich ein weites Anwendungsspektrum für die erfindungsgemäßen Halbzeuge.

Üblicherweise beträgt die Menge an Matrixfaser 5 bis 80 Vol.-%, vorzugsweise 30 bis 70 Vol.-%, insbesondere 40 bis 50 Vol.-%, bezogen auf die Gesamtmenge an Matrix- und Verstärkungsfaser.

Der erfindungsgemäße Verbundwerkstoff läßt sich aus dem Halbzeug durch Erhitzen erhalten. Dies kann unter Formgebung und gegebenenfalls unter Anwendung von Druck erfolgen. Die Verarbeitungstemperatur wird dabei so gewählt, daß die Matrixfasern vollständig aufschmelzen und die Verstärkungsfasern vollständig umfließen können, so daß sich eine einheitliche Matrix ausbildet, welche die Verstärkungsfasern möglichst umfassend benetzt. Gegebenenfalls lassen sich die Verstärkungsfasern während des Aufschmelzens der Matrixfasern durch Zug orientieren, z.B. beim Filament Winding oder beim Tape Winding. Es sind auch Ausführungsformen des Halbzeugs möglich, bei denen die Verstärkungsfasern weitgehend unidirektional ausgerichtet sind.

Die auf diese Weise erhältlichen Verbundwerkstoffe lassen sich beispielsweise auf denjenigen Gebieten einsetzen, wo hohe Festigkeit, Temperaturbeständigkeit und Chemikalienbeständigkeit gefragt sind. Beispiele dafür sind der Einsatz in der Luft- und Raumfahrttechnik oder im Apparatebau.

## Patentansprüche

1. Halbzeug zur Herstellung von Verbundwerkstoffen umfassend Verstärkungsfasern auf der Basis von anorganischem Material und/oder organischen Polymeren und Matrixfasern, wobei das Halbzeug in Form eines textilen Flächengebildes vorliegt, Verstärkungsfasern einer Festigkeit von mehr als 20 cN/dtex und eines Anfangsmoduls von mehr als 30 GPa eingesetzt werden, und Matrixfasern auf Basis von vollständig aufschmelzbaren aromatischen Polyetheramiden der Formel II eingesetzt werden, deren Schmelzpunkt mindestens 10°C unterhalb des Schmelz- oder Zersetzungspunktes der Verstärkungsfaser liegt

$$R^3\text{-}\cdots\text{-}[NH\text{-}Ar^4\text{-}NH]_x\text{-}\cdots\text{-}[\overset{\overset{O}{\|}}{C}\text{-}Ar^3\text{-}\overset{\overset{O}{\|}}{C}]_y\text{-}\cdots\text{-}[NH\text{-}Ar^5\text{-}O\text{-}Ar^6\text{-}Y\text{-}Ar^6\text{-}O\text{-}Ar^5\text{-}NH]_z\text{-}\cdots\text{-}R^3 \qquad (II)$$

worin $Ar^3$ einen zweiwertigen substituierten oder unsubstituierten aromatischen Rest bedeutet, dessen freie Valenzen sich in para- oder meta-Stellung oder in vergleichbarer paralleler oder gewinkelter Stellung zueinander befinden,

$Ar^4$ eine der für $Ar^3$ angegebenen Bedeutungen haben kann oder eine Gruppe $-Ar^7-Z-Ar^7-$ darstellt, wobei Z eine $-C(CH_3)_2-$ oder $-O-Ar^7-O-$Brücke ist und
$Ar^7$ für einen zweiwertigen aromatischen Rest steht,
$Ar^5$ und $Ar^6$ gleich oder verschieden voneinander sind und für einen substituierten oder unsubstituierten para- oder meta-Arylenrest stehen,
Y eine $-C(CH_3)_2-$, $-SO_2-$, $-S-$ oder $-C(CF_3)_2-$Brücke darstellt, wobei

a) das Polyetheramid ein mittleres Molekulargewicht (Zahlenmittel) im Bereich von 5000 bis 50 000 aufweist
b) die Molekulargewichtskontrolle gezielt durch nicht stöchiometrische Zugabe der Monomereinheiten erfolgt, wobei die Summe der Molenbrüche x, y und z eins ist, die Summe von x und z nicht gleich y ist und x den Wert null annehmen kann, und
c) die Enden der Polymerkette praktisch vollständig mit monofunktionellen im Polymer nicht weiterreagierenden Resten $R^3$ verschlossen sind, die unabhängig voneinander gleich oder verschieden sein können.

2. Halbzeug gemäß Anspruch 1, dadurch gekennzeichnet, daß die Verstärkungsfasern einen Anfangsmodul von mehr als 50 GPa aufweisen.

3. Halbzeug gemäß Anspruch 1, dadurch gekennzeichnet, daß die Verstärkungs- und Matrixfasern in Form von Mischgarnen vorliegen.

4. Halbzeug gemäß Anspruch 1, dadurch gekennzeichnet, daß die Verstärkungs- und Matrixfasern in Form von Bi- oder Mehrkomponentenfasern vorliegen, wobei mindestens ein Teil der Matrixkomponente sich auf der Oberfläche dieser Fasern befindet.

5. Halbzeug gemäß Anspruch 1, dadurch gekennzeichnet, daß Verstärkungsfasern auf der Basis von aromatischen Polyamiden, aromatischen Polyestern, oder Polyacrylnitril eingesetzt werden.

6. Halbzeug gemäß Anspruch 5, dadurch gekennzeichnet, daß Verstärkungsfasern auf der Basis von aromatischen Polyamiden eingesetzt werden, insbesondere auf der Basis von nicht thermoplastisch verformbaren Aramiden.

7. Halbzeug gemäß Anspruch 1, dadurch gekennzeichnet, daß Verstärkungsfasern auf der Basis von anorganischem Material, vorzugsweise Bor-, Kohlenstoff- oder Glasfasern eingesetzt werden.

8. Halbzeug gemäß einem der Ansprüche 1 oder 2, dadurch gekennzeichnet, daß als textile Flächengebilde Gestricke der Gewirke oder insbesondere Gewebe oder Kettwirkware eingesetzt werden.

9. Halbzeug gemäß Anspruch 6, dadurch gekennzeichnet, daß es sich bei den Verstärkungsfasern um Fasern aus in organischen Lösungsmitteln löslichen Aramiden handelt, die mindestens 95 Mol-%, bezogen auf das Polyamid, an wiederkehrenden Struktureinheiten der Formeln Ia, Ib, Ic und Id enthalten

$$-OC-Ar^1-CO- \quad (Ia)$$

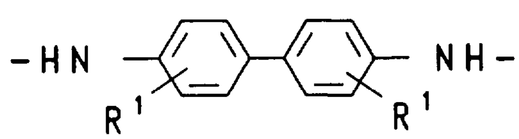

(Ib)

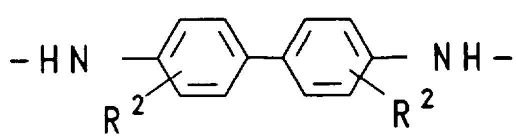

(Ic),

und

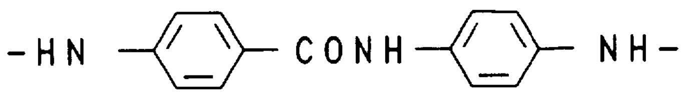

(Id)

und bis zu 5 Mol-% m-Bindungen enthaltende, von aromatischen Dicarbonsäuren und/oder von aromatischen Diaminen abgeleitete Struktureinheiten (Ie) und/oder (If) enthalten, wobei die Summe der Molanteile der Struktureinheiten (Ia) + (Ie) und der Molanteile der Struktureinheiten (Ib) + (Ic) + (Id) + (If) im wesentlichen gleich groß sind, und die Anteile der Diaminkomponenten (Ib), (Ic) und (Id) im Verhältnis zur Gesamtmenge dieser Diaminkomponente innerhalb folgender Grenzen liegen:

| | |
|---|---|
| Struktureinheit (Ib) | 30-55 Mol-% |
| Struktureinheit (Ic) | 15-35 Mol-% |
| Struktureinheit (Id) | 20-40 Mol-% |

worin
$-Ar^1$. einen zweiwertigen aromatischen Rest bedeutet, dessen Valenzbindungen in para- oder vergleichbarer koaxialer oder paralleler- Stellung stehen und durch einen oder zwei inerte Reste, wie Alkyl, Alkoxy oder Halogen substituiert sein kann, und worin $-R^1$ und $-R^2$ voneinander verschiedene niedere Alkylreste oder niedere Alkoxyreste oder Halogenatome bedeuten.

**10.** Halbzeug gemäß Anspruch 6, dadurch gekennzeichnet, daß es sich bei den Verstärkungsfasern um Fasern aus in organischen Lösungsmitteln löslichen Aramiden handelt, die mindestens 95 Mol-%, bezogen auf das Polyamid, an wiederkehrenden Struktureinheiten der Formeln Ia, Ig, Ib und Id

$$-OC-Ar^1-CO- \quad (Ia),$$

$$-HN-Ar^2-NH- \quad (Ig),$$

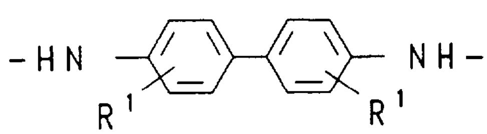

(Ib),

und

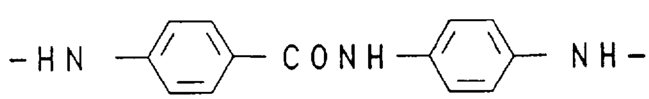

(Id)

und bis zu 5 Mol-% m-Bindungen enthaltende, von aromatischen Dicarbonsäuren und/oder von aromatischen Diaminen abgeleitete Struktureinheiten (Ie) und/oder (If) enthalten, wobei die Summe der Molanteile der Struktureinheiten (Ia) + (Ie) und der Molanteile der Struktureinheiten (Ig) + (Ib) + (Id) + (If) im wesentlichen gleich groß sind, und die Anteile der Diaminkomponenten (Ig), (Ib) und (Id) im Verhältnis zur Gesamtmenge dieser Diaminkomponente innerhalb folgender Grenzen liegen:

| | |
|---|---|
| Struktureinheit (Ig) | 15-25 Mol-% |
| Struktureinheit (Ib) | 45-65 Mol-% |
| Struktureinheit (Id) | 15-35 Mol-% |

worin $-Ar^1-$ und $-R^1$ die in Anspruch 9 definierten Bedeutungen besitzen und $-Ar^2-$ eine der für $-Ar^1-$ definierten Bedeutungen annimmt.

**11.** Halbzeug gemäß Anspruch 6, dadurch gekennzeichnet, daß es sich bei den Verstärkungsfasern um Fasern aus in organischen Lösungsmitteln löslichen Aramiden handelt, die mindestens 95 Mol-%, bezogen auf das Polyamid, an wiederkehrenden Struktureinheiten der Formeln Ia, Ig, Ib und Ic

$$-OC-Ar^1-CO- \quad (Ia),$$

$$-HN-Ar^2-NH- \qquad (Ig),$$

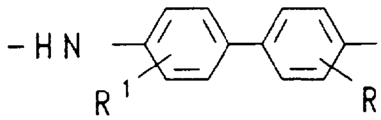

(Ib),

und

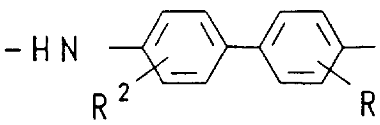

(Ic),

und bis zu 5 Mol-% m-Bindungen enthaltende, von aromatischen Dicarbonsäuren und/oder von aromatischen Diaminen abgeleitete Struktureinheiten (Ie) und/oder (If) enthalten, wobei die Summe der Molanteile der Struktureinheiten (Ia) + (Ie) und der Molanteile der Struktureinheiten (Ig) + (Ib) + (Ic) + (If) im wesentlichen gleich groß sind, und die Anteile der Diaminkomponenten (Ig), (Ib) und (Ic) im Verhältnis zur Gesamtmenge dieser Diaminkomponente innerhalb folgender Grenzen liegen:

| | |
|---|---|
| Struktureinheit (Ig) | 20-30 Mol-% |
| Struktureinheit (Ib) | 35-55 Mol-% |
| Struktureinheit (Ic) | 15-40 Mol-% |

worin $-Ar^1-$, $-R^1$ und $-R^2$ die in Anspruch 9 definierte Bedeutung besitzen und $-Ar^2-$ die in Anspruch 10 definierte Bedeutung besitzt.

12. Verbundwerkstoff erhältlich durch Erhitzen des Halbzeugs gemäß einem der Ansprüche 1 bis 11, gegebenenfalls unter Druck, so daß die Fasern aus dem Matrixmaterial schmelzen und die Verstärkungsfasern unter Ausbildung einer Matrix umfließen und mit einander verbinden.

13. Verwendung des Halbzeuges gemäß einem der Ansprüche 1 bis 11 zur Herstellung von Verbundwerkstoffen.

## Claims

1. A semi-finished product for the production of composite materials comprising reinforcing fibers based on inorganic material and/or organic polymers and matrix fibers, wherein the semi-finished product is in the form of a textile sheet-like structure, reinforcing fibers having a tenacity of greater than 20 cN/dtex and an initial modulus of greater than 30 GPa are employed, and matrix fibers based on fully fusible aromatic polyether-amides of the formula II are employed, the melting point of which is at least 10°C below the melting or decomposition point of the reinforcing fiber

$$R^3\text{-}[NH\text{-}Ar^4\text{-}NH]_x\text{-}[\overset{\overset{O}{\|}}{C}\text{-}Ar^3\text{-}\overset{\overset{O}{\|}}{C}]_y\text{-}[NH\text{-}Ar^5\text{-}O\text{-}Ar^6\text{-}Y\text{-}Ar^6\text{-}O\text{-}Ar^5\text{-}NH]_z\text{-}R^3 \qquad (II)$$

in which $Ar^3$ is a divalent substituted or unsubstituted aromatic radical whose free valences are in the para- or meta-position or in a comparable parallel or angled position to one another, $Ar^4$ may have one of the meanings indicated for $Ar^3$ or is an $-Ar^7-Z-Ar^7-$ group

where Z is a $-C(CH_3)_2-$ or $-O-Ar^7-O-$ bridge and $Ar^7$ is a divalent aromatic radical,
$Ar^5$ and $Ar^6$ are identical or different and are a substituted or unsubstituted para- or meta-arylene radical,
Y is a $-C(CH_3)_2-$, $-SO_2-$, $-S-$ or $-C(CF_3)_2-$ bridge, where

a) the polyether-amide has a mean molecular weight (number average) in the range from 5000 to 50,000
b) the molecular weight is controlled specifically by nonstoichiometric addition of the monomer units, where the total of the mole fractions x, y and z is one, the total of x and z is not equal to y, and x can adopt the value zero, and

c) the ends of the polymer chain are blocked virtually completely by monofunctional radicals $R^3$ which do not react further in the polymer and, independently of one another, may be identical or different.

**2.** A semi-finished product as claimed in claim 1, wherein the reinforcing fibers have an initial modulus of greater than 50 GPa.

**3.** A semi-finished product as claimed in claim 1, wherein the reinforcing and matrix fibers are in the form of mixed yarns.

**4.** A semi-finished product as claimed in claim 1, wherein the reinforcing and matrix fibers are in the form of bicomponent or multicomponent fibers, at least some of the matrix component being on the surface of these fibers.

**5.** A semi-finished product as claimed in claim 1, wherein reinforcing fibers based on aromatic polyamides, aromatic polyesters or polyacrylonitrile are employed.

**6.** A semi-finished product as claimed in claim 5, wherein reinforcing fibers based on aromatic polyamides, in particular based on non-thermoplastic aramids, are employed.

**7.** A semi-finished product as claimed in claim 1, wherein reinforcing fibers based on inorganic material preferably boron fibers, carbon fibers or glass fibers, are employed.

**8.** A semi-finished product as claimed in either of claims 1 and 2, wherein the textile sheet-like structures employed are knitted fabrics or in particular woven fabrics or warp-knit fabrics.

**9.** A semi-finished product as claimed in claim 6, wherein the reinforcing fibers are fibers made from aramids which are soluble in organic solvents and contain at least 95 mol%, based on the polyamide, of recurring structural units of the formulae Ia, Ib, Ic and Id

$$-OC-Ar^1-CO- \qquad (Ia)$$

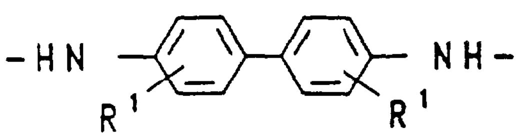

(Ib)

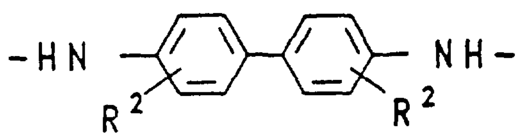

(Ic),

and

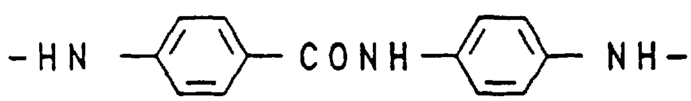

(Id)

and contain up to 5 mol% of structural units (Ie) and/or (If) containing m-bonds and derived from aromatic dicarboxylic acids and/or from aromatic diamines, the total of the molar proportions of the structural units (Ia) + (Ie) and the molar proportions of the structural units (Ib) + (Ic) + (Id) + - (If) being essentially the same, and the ratio between the amounts of the diamine components (Ib), (Ic) and (Id) and the total amount of this diamine component being within the following limits:

| | |
|---|---|
| structural unit (Ib) | 30-55 mol%, |
| structural unit (Ic) | 15-35 mol%, |
| structural unit (Id) | 20-40 mol%, |

where
$-Ar^1-$ is a divalent aromatic radical whose valence bonds are in the para- or comparable coaxial or parallel position, and may be substituted by one or two inert radicals, such as alkyl, alkoxy or halogen, and where
$-R^1$ and $-R^2$ are different from one another and are lower alkyl radicals or lower alkoxy radicals or halogen atoms.

**10.** A semi-finished product as claimed in claim 6, wherein the reinforcing fibers are fibers made from aramids which are soluble in organic solvents and contain at least 95 mol%, based on the polyamide, of recurring structural units of the formulae Ia, Ig, Ib and Id

$$-OC-Ar^1-CO- \qquad (Ia)$$

$$-HN-Ar^2-NH- \qquad (Ig)$$

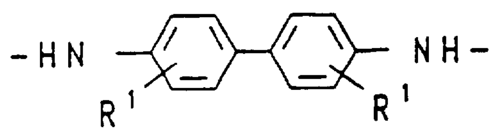 (Ib),

and

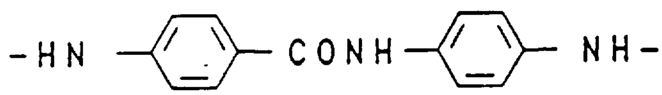 (Id)

and up to 5 mol% of structural units (Ie) and/or (If) containing m-bonds and derived from aromatic dicarboxylic acids and/or from aromatic diamines, the total of the molar proportions of the structural units (Ia) + (Ie) and the molar proportions of the structural units (Ig) + (Ib) + (Id) + (If) being essentially the same, and the ratio between the amounts of the diamine components (Ig), (Ib) and (Id) and the total amount of this diamine component being within the following limits:

| | |
|---|---|
| structural unit (Ig) | 15-25 mol%, |
| structural unit (Ib) | 45-65 mol%, |
| structural unit (Id) | 15-35 mol%, |

where $-Ar^1-$ and $-R^1$ are as defined in claim 9, and $-Ar^2-$ has one of the meanings defined for $-Ar^1-$.

**11.** A semi-finished product as claimed in claim 6, wherein the reinforcing fibers are fibers made from aramids which are soluble in organic solvents and contain at least 95 mol%, based on the polyamide, of recurring structural units of the formulae Ia, Ig, Ib and Ic

$$-OC-Ar^1-CO- \qquad (Ia)$$

$$-HN-Ar^2-NH- \qquad (Ig)$$

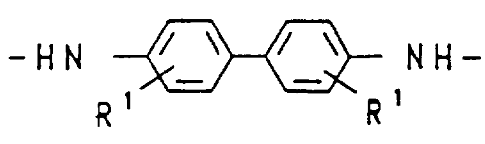 (Ib),

and

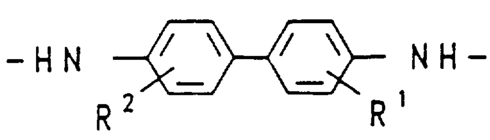 (Ic)

and up to 5 mol% of structural units (Ie) and/or (If) containing m-bonds and derived from aromatic dicarboxylic acids and/or from aromatic diamines, the total of the molar proportions of the structural units (Ia) + (Ie) and the molar

proportions of the structural units (Ig) + (Ib) + (Ic) + (If) being essentially the same, and the ratio between the amounts of the diamine components (Ig), (Ib) and (Ic) and the total amount of this diamine component being within the following limits:

| | |
|---|---|
| structural unit (Ig) | 20-30 mol%, |
| structural unit (Ib) | 35-55 mol%, |
| structural unit (Ic) | 15-40 mol%, |

where $-Ar^1-$, $-R^1$ and $-R^2$ are as defined in claim 9, and $-Ar^2-$ is as defined in claim 10.

**12.** A composite material obtainable by heating a semi-finished product as claimed in any one of claims 1 to 11, if desired under pressure, so that the fibers of the matrix material melt and flow around the reinforcing fibers to form a matrix and bond them to one another.

**13.** The use of a semi-finished product as claimed in any one of claims 1 to 11 for the production of composite materials.

**Revendications**

**1.** Demi-produit pour la préparation de matériaux composites renfermant des fibres de renforcement à base de matière minérale et/ou de polymères organiques et des fibres de matrice, le demi-produit étant présent sous forme d'un produit textile plat, en utilisant des fibres de renforcement ayant une résistance à la rupture en traction supérieure à 20 cN/dtex et d'un module de traction initial supérieur à 30 GPa et des fibres de matrice à base de polyétheramides de formule II aromatiques, complètement fusibles, dont le pont de fusion est d'au moins 10°C inférieur au point de fusion ou de décomposition des fibres de renforcement

$$R^3\text{-}\cdots\text{-}[NH\text{-}Ar^4\text{-}NH]_x\text{-}\cdots\text{-}[\overset{\overset{\displaystyle O}{\|}}{C}\text{-}Ar^3\text{-}\overset{\overset{\displaystyle O}{\|}}{C}]_y\text{-}\cdots\text{-}[NH\text{-}Ar^5\text{-}O\text{-}Ar^6\text{-}Y\text{-}Ar^6\text{-}O\text{-}Ar^5\text{-}NH]_z\text{-}\cdots\text{-}R^3 \qquad (II)$$

où

$Ar^3$ représente un radical aromatique bivalent substitué ou non-substitué, dont les valences libres se trouvent l'une par rapport à l'autre en position para ou méta ou en position comparable parallèle ou angulaire,
$Ar^4$ peut avoir l'une des significations données pour $Ar^3$ ou représente un groupe $Ar^7\text{-}Z\text{-}Ar^7$,
Z étant un pont $-O-Ar^7-O-$ ou $-C(CH_3)_2-$ et
$Ar^7$ représente un radical aromatique bivalent,
$Ar^5$ et $Ar^6$ sont identiques ou différents l'un de l'autre et représentent un radical para- ou méta-arylène substitué ou non substitué,
Y représente un pont $-(CF_3)_2-$, $-C(CH_3)_2-$, $-SO_2-$ ou $-S-$, où

a) le polyétheramide présente un poids moléculaire moyen (moyenne en nombre) de 5000 à 50 000,
b) le contrôle du poids moléculaire est effectué de façon appropriée par additon non-stoechiométrique de motifs monomères, la somme de x et z n'étant pas égale à y et x peut prendre la valeur de zéro, et
c) les extrémités de la chaîne polymère sont pratiquement entièrement fermées par des radicaux $R^3$ ne réagissant pas ultérieurement dans le polymère, lesquels radicaux, indépendemment les uns des autres, peuvent être identiques ou différents.

**2.** Demi-produit selon la revendication 1, caractérisé en ce que les fibres de renforcement présentent un module de traction initial supérieur à 50 GPa.

**3.** Demi-produit selon la revendication 1, caractérisé en ce que les fibres de renforcement et de matrice sont présentes sous forme de filés mélangés.

**4.** Demi-produit selon la revendication 1, caractérisé en ce que les fibres de renforcement et de matrice sont présentes sous forme de fibre bi- ou multi-composant, une partie au moins du composant matrice se trouvant à la surface de

ces fibres.

**5.** Demi-produit selon la revendication 1, caractérisé en ce qu'on utilise des fibres de renforcement à base de polyamides aromatiques, de polyesters aromatiques ou de polyacrylonitrile.

**6.** Demi-produit selon la revendication 5, caractérisé en ce qu'on utilise des fibres de renforcement à base de polyamides aromatiques, plus particulièrement à base d'aramides thermoplastiquement non-déformables.

**7.** Demi-produit selon la revendication 1, caractérisé en ce qu'on utilise des fibres de renforcement à la base de matière minérale, de préférence des fibres de bore, de carbone ou de verre.

**8.** Demi-produit selon la revendication 1 ou 2, caractérisé en ce qu'on utilise en tant que produits textiles tricotés plats des articles de bonnetterie, ou plus particulièrement des tissus, ou des articles de tricot-chaîne.

**9.** Demi-produit selon la revendication 6, caractérisé en ce que, dans le cas des fibres de renforcement, il s'agit de fibres aramides solubles dans des solvants organiques, qui contiennent au moins 95% en moles, par rapport au polyamide, de motifs de structure récurrants de formules Ia, Ib, Ic et Id

$$-OC-Ar^1-CO- \qquad (Ia)$$

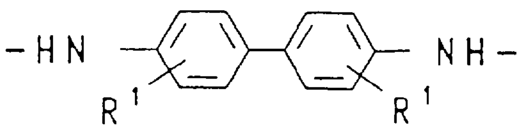

(Ib)

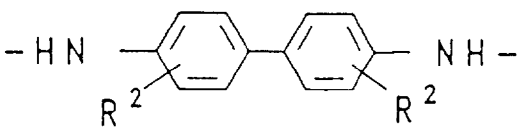

(Ic),

et

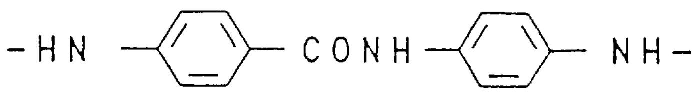

(Id)

et jusqu'à 5% en moles de motifs de structure (Ie) et/ou (If) dérivant des acides dicarboxyliques aromatiques et/ou des diamines aromatiques contenant des composés m-, la somme des taux en moles en motifs de structure (Ia) + (Ie) et des taux en moles en motifs de structure (Ib) + (Ic) + (Id) + (If) ayant essentiellement les mêmes grandeurs et les taux en constituant diamine (Ib), (Ic) et (Id), par rapport à la quantité totale de ce constituant diamine, dans un rapport qui se trouve dans les limites suivantes :

| | |
|---|---|
| Motif de structure (Ib) | 30-55 % en moles |
| Motif de structure (Ic) | 15-35 % en moles |
| Motif de structure (Id) | 20-40 % en moles |

où
$-Ar^1-$ représente un radical aromatique bivalent, dont les liaisons de valence sont en position para- ou en position coaxiale ou parallèle comparable et peut être substitué par un ou deux radicaux inertes, comme alkyle, alcoxy ou halogène, et où $-R^1-$ et $-R^2-$ représentent des radicaux alkyles inférieurs ou des radicaux alcoxy inférieurs ou des atomes d'halogènes.

**10.** Demi-produit selon la revendication 6, caractérisé en ce que, dans le cas des fibres de renforcement, il s'agit de fibres aramides solubles dans des solvants organiques, qui contiennent au moins 95%, par rapport au polyamide, de motifs de structure récurrents de formule Ia, Ig, Ib et Id :

$$-OC-Ar^1-CO- \qquad (Ia),$$

$$-HN-Ar^2-NH- \qquad (Ig),$$

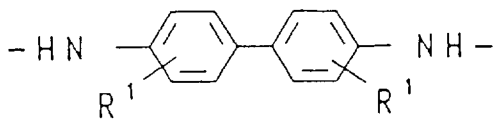

(Ib),

et

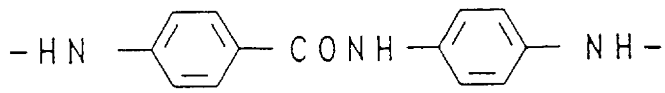

(Id)

et jusqu'à 5% en moles de motifs de structure (Ie) et/ou (If) dérivant des acides dicarboxyliques aromatiques et/ou des diamines aromatiques contenant des composés m-, la somme des taux en moles en motifs de structure (Ia) + (Ie) et des taux en moles en motifs de structure (Ig) + (Ib) + (Id) + (If) ayant essentiellement les mêmes grandeurs et les taux en constituant diamine (Ig), (Ib) et (Id), par rapport à la quantité totale de ce constituant diamine, dans un rapport qui se trouve dans les limites suivantes :

| | |
|---|---|
| Motif de structure (Ig) | 15-25 % en moles |
| Motif de structure (Ib) | 45-65 % en moles |
| Motif de structure (Id) | 15-35 % en moles |

où
$-Ar^1-$ et $-R^1-$ ont les significations définies dans la revendication 9 et $-Ar^2-$ prend l'une des signification définies pour $-Ar^1-$.

**11.** Demi-produit selon la revendication 6, caractérisé en ce que, dans le cas de fibres de renforcement, il s'agit des fibres aramides solubles dans des solvants organiques, qui contiennent au moins 95% en moles, par rapport au polyamide, de motifs de structure récurrents de formules Ia, Ig, Ib et Ic

$$-OC-Ar^1-CO- \qquad (Ia),$$

$$-HN-Ar^2-NH- \qquad (Ig),$$

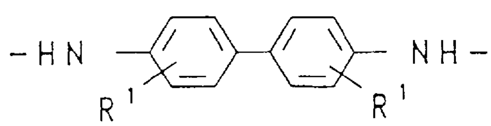

(Ib),

et

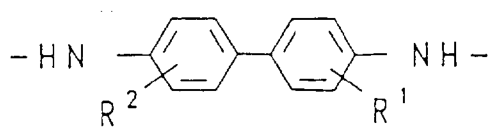

(Ic),

et jusqu'à 5% en moles de motifs de structure (Ie) et/ou (If) dérivant des acides dicarboxyliques aromatiques et/ou des diamines aromatiques contenant des composés m-, la somme des taux en moles en motifs de structure (Ia) + (Ie) et des taux en moles en motifs de structure (Ig) + (Ib) + (Ic) + (If) ayant essentiellement la même grandeur et les taux en constituant diamine (Ig), (Ib) et (Ic), par rapport à la quantité totale de ce constituant diamine, dans un rapport qui se trouve dans les limites suivantes :

| | |
|---|---|
| Motif de structure (Ig) | 20-30 % en moles |
| Motif de structure (Ib) | 35-55 % en moles |
| Motif de structure (Id) | 15-40 % en moles |

où
$-Ar^1-$, $-R^1-$ et $-R^2-$ ont la signification définie dans la revendication 9, et $-Ar^2-$ a la signification définie dans la revendication 10.

**12.** Matériau composite que l'on peut obtenir par chauffage du demi-produit selon l'une des revendications 1 à 11, éventuellement sous pression, de sorte que les fibres fondent en s'écoulant de la matière de matrice et enveloppent en s'écoulant les fibres de renforcement en formant une matrice et se lient les unes aux autres.

**13.** Utilisation du demi-produit selon l'une des revendication 1 à 11 pour la préparation de matériaux composites.